# EUROPEAN PATENT SPECIFICATION

(11) **EP 1 647 531 B1**
(45) Date of publication and mention of the grant of the patent: **04.01.2017**
(21) Application number: 05256330.1
(22) Date of filing: 12.10.2005
(51) Int. Cl.: B01D 53/04, B01D 53/22

(54) **Method for concentrating methane from sewage sludge and methane storage equipment**
Methode zum Konzentrieren von Methan aus Klärschlamm und Methanlagerungsausstattung
Procede de concentration de methane a partir de boues residuaires et equipements de stockage de methane

(30) Priority: 13.10.2004 JP 2004299105
(43) Date of publication of application: 19.04.2006
(73) Proprietor: NGK Insulators, Ltd., Nagoya-City, Aichi Pref. 467-8530 (JP); Fujita, Shoichi, Nagaoka-shi, Niigata 9402188 (JP); Himeno, Shuji, Nagaoka-shi, Niigata 9402188 (JP)
(72) Inventor: Fujita, Shoichi, Nagaoka-shi, Niigata 940-2188 (JP); Himeno, Shuji, Nagaoka-shi, Niigata 940-2188 (JP); Suzuki, Kenji, c/o NGK Insulators, Ltd., Nagoya City, Aichi-ken, 467-8530 (JP)
(74) Representative: Naylor, Matthew John

(56) References cited:
- EP-A- 0 970 922
- EP-A- 1 437 172

## Description

### BACKGROUND OF THE INVENTION

### 1. Field of the Invention

The invention relates to a method for concentrating methane in a digestion gas generated from sewage sludge, and to a methane storage equipment.

### 2. Description of the Related Art

A large quantity of flammable digestion gas is generated in a digestion process of sewage sludge used in a sewage disposal plant. This digestion gas mainly comprises methane and carbon dioxide gas with a proportion between them of about 6:4. Accordingly, in a proposed methane concentration apparatus, carbon dioxide gas is separated from methane by allowing the digestion gas to pass through a gas separation membrane after desulfurization to concentrate methane as shown in patent document 1.

An organic membrane is used for the gas separation membrane in the apparatus according to paragraph No. 0016 of patent document 1. However, since the digestion gas contains a large amount of moisture, it is a problem that if the digestion gas is flowed, the performance of the membrane is deteriorated upon long term continuous uses since the organic gas separation membrane is usually poor in moisture resistance. Consequently, the membrane is required to be frequently replaced, and the equipment cost and running cost become high, although this problem is not described in patent document 1.

In addition, the pressure of the digestion gas cannot be so increased because the organic membrane usually has a low strength.

While patent document 1 describes a preferable pressure to be 2 to 10 kg/cm² (about 0.2 to 1 MPa), concentration of methane is insufficient since the amount of carbon dioxide permeating through the membrane is small under a low pressure.

EP 1 437 172 A1 discloses the use of a DDR zeolite membrane for separating a mixture of carbon dioxide and methane.

[Patent document 1] Japanese Patent Application Laid-Open No. 2001-949

### SUMMARY OF THE INVENTION

Accordingly, it is an object of the present invention to provide a method for concentrating methane from sewage sludge capable of concentrating methane contained in a digestion gas without requiring high equipment cost and running cost as in the conventional art by solving the problems in the conventional art as described above, and methane storage equipment.

The invention performed for solving the above-mentioned problem provides a method for concentrating methane from sewage sludge by separating and removing carbon dioxide gas from the digestion gas generated from the sewage sludge to concentrate methane gas contained in the digestion gas, wherein carbon dioxide gas in the digestion gas is separated and removed through a DDR zeolite membrane after pressurizing the digestion gas at 0.5 MPa or more.

The digestion gas is preferably pressurized at 1.0 to 3.5 MPa. The digestion gas is preferably concentrated with the DDR zeolite membrane by a cross-flow method. Concentrated methane gas is introduced into a methane adsorption storage tank without re-pressurizing to store methane by adsorption in order to make the storage equipment small size.

The invention performed for solving the above-mentioned problem also provides a storage equipment of methane from sewage sludge for separating and removing carbon dioxide gas from a digestion gas generated from sewage sludge to concentrate methane gas contained in the digestion gas, wherein the concentration apparatus comprises a pressurizing device for pressurizing the digestion gas containing methane generated from sewage sludge, a DDR zeolite membrane for separating and removing carbon dioxide gas in the pressurized digestion gas to concentrate methane, and a methane adsorption storage tank for storing highly concentrated methane obtained with the DDR zeolite membrane by adsorption with an adsorbing agent.

According to the invention, carbon dioxide gas is separated and removed from the digestion gas with the DDR zeolite membrane. DDR zeolite has a fine pore structure in the crystal. Since the pore diameter is suitable for separating carbon dioxide gas while DDR zeolite is excellent in moisture resistance, the membrane is not deteriorated by moisture contained in the digestion gas generated from sewage sludge, and is able to withstand a long term use. Since the DDR zeolite membrane is excellent in selective permeability for carbon dioxide gas, the concentration of carbon dioxide gas in the permeated gas is high with a high methane recovery yield from a methane recovery port.

High strength of the DDR zeolite membrane permits the digestion gas to be subjected to gas separation by pressurizing the gas at 0.5 MPa or more, preferably 1.0 to 3.5 MPa, with a pressurizing device. The separated gas is directly introduced into the methane adsorption storage tank to enable the storage apparatus to be small size. A pressure of less than 0.5 MPa is not preferable since separation ability of the membrane is lowered. On the contrary, the storage process cannot make use of the advantage of adsorption storage due to a small ratio of storage efficiency between compression storage and adsorption storage when the pressure exceeds 3.5 MPa, while the process is also not preferable from the economical point of view since the cost for making the equipment pressure-resistant is expensive. The pressure obtained by initially pressurizing the digestion gas can be directly used for concentration and storage of methane in the invention.

### BRIEF DESCRIPTION OF THE DRAWINGS

Fig. 1 is an overall diagram of a high efficiency system for utilizing the digestion gas by taking advantage of the invention.
Fig. 2 is a graph showing the relation between the pressure of methane gas and storage ability.
Fig. 3 is a cross-sectional view of a gas separation module used in examples.
Fig. 4 is a graph showing the relation between the feed pressure and flow rate of the digestion gas, and the concentration of methane.
Fig. 5 is a graph showing the relation between the feed pressure and flow rate of the digestion gas, and recovery yield of methane.

### DESCRIPTION OF THE PREFERRED EMBODIMENTS

Preferable embodiments of the invention will be described below.

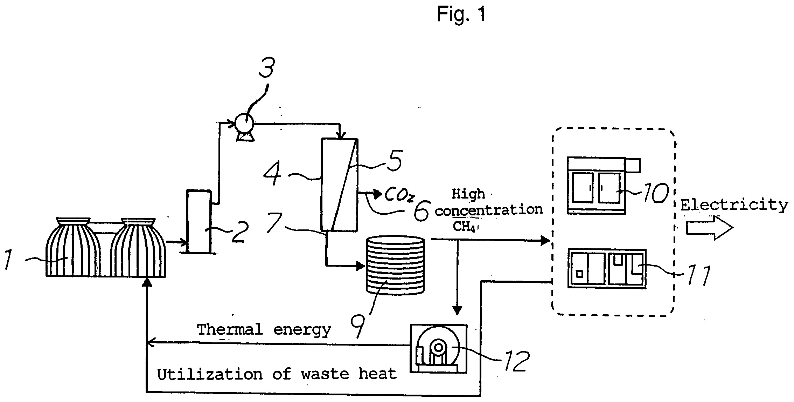

Fig. 1 shows an overall diagram of a high efficiency system for utilizing the digestion gas by taking advantage of the invention. The reference numeral 1 shows a digestion tank for sewage disposal, where the digestion gas is continuously exhausted. The digestion gas contains methane and carbon dioxide gas in a 6:4 ratio as described above along with impurities such as moisture and sulfur oxides. Sulfur fractions are first removed from the digestion gas with desulfurization equipment 2 known in the art, and is pressurized at 0.5 to 3.5 MPa with a pressurizing device 3. The sulfur fraction may be removed with the desulfurization equipment 2 after pressurizing the digestion gas under some circumstances.

The pressurized digestion gas is then sent to a gas separation module 4. The gas separation module 4 comprises a DDR zeolite membrane 5 within a pressurizing vessel. In this embodiment, the DDR zeolite membrane 5 is formed on the surface of an alumina porous material as a substrate. DDR zeolite is a crystal mainly composed of silica, and has a fine pore structure in the crystal. The pore is formed into a polygon having eight-membered rings of oxygen with a diameter of the pore of 0.44 × 0.36 mm (4.4 × 3.6 Ǻ). Accordingly, carbon dioxide molecules smaller than this diameter readily passes through this pore while methane having a larger molecular diameter can hardly pass through the pore, and DDR zeolite can be used as a molecular sieve by taking advantage of this property. The method for producing the DDR zeolite membrane is described in detail in Japanese Patent Application Laid-Open No. 2003-159518 by the applicant of this invention.

As shown in Fig. 1, the pressurized digestion gas is supplied to the gas separation module 4 by a cross-flow method. Continuous treatment of a large quantity of the digestion gas is possible by the cross-flow method. Carbon dioxide gas in the digestion gas readily passes through the DDR zeolite membrane 5, and is exhausted from a permeation gas exhaust port 6. On the other hand, concentrated methane is recovered from a methane recovery port 7 after separating and removing carbon dioxide gas. The inner pressure of the gas separation module 4 is maintained at a prescribed pressure within a range of 0.5 to 3.5 MPa, preferably at 1 to 3.5 MPa. Pressurizing the digestion gas as described above enables carbon dioxide gas to be rapidly separated and removed, thus permitting methane to be efficiently concentrated using a small size gas separation module 4. The effect of the flow rate and pressure of the digestion gas on the concentration and recovery yield of methane at the outlet of the module will be described in detail in the examples hereinafter.

Methane concentrated with the gas separation module 4 is introduced into a methane adsorption storage tank 9 under a pressure for concentration, or within a pressure maintained in the range of 0.5 to 3.5 MPa without re-pressurizing, and is stored by adsorption. The practically available methane adsorption storage tank 9 uses, for example, activated carbon as an adsorption agent. Highly concentrated methane thus stored is converted into electricity in a power generation system such as a gas turbine 10 or a fuel cell 11, or converted into thermal energy in a boiler 12. Exhaust heat generated from the thermal energy or power generation system may be utilized for heating the digestion tank 1 as shown in Fig. 1.

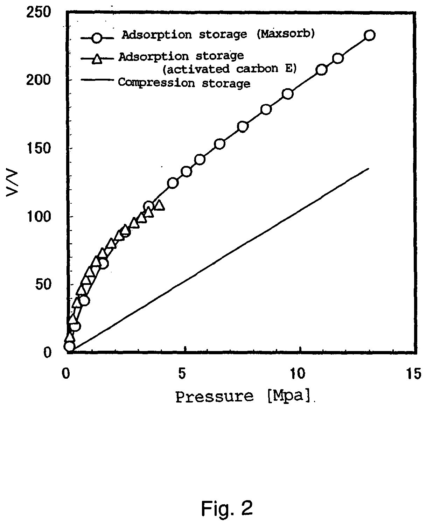

Fig. 2 is a graph showing the relation between the pressure of methane gas and storage ability. The vertical axis shows the volume of methane gas at 1 atmosphere capable of storing per unit volume of the storage tank. While the solid line shows the volume for compression storage, the graph shows that a larger amount of methane may be stored by adsorption storage. While the storage ability gradually increases with the increase of the pressure, the storage process cannot make use of the advantage of adsorption storage due to a small ratio of storage efficiency between compression storage and adsorption storage when the pressure exceeds 3.5 MPa. Furthermore, since cost for making the equipment pressure-resistant is expensive when the pressure exceeds 3.5 MPa, a range of 3.5 MPa or less is conjectured to be preferable from the economical and practical point of view.

Methane gas is concentrated and stored after separating and removing carbon dioxide gas with the DDR zeolite membrane 5 by pressurizing the digestion gas in the invention. Separation performance of carbon dioxide gas with the DDR zeolite membrane 5 was confirmed by the experiments as set forth hereinafter.

### Examples

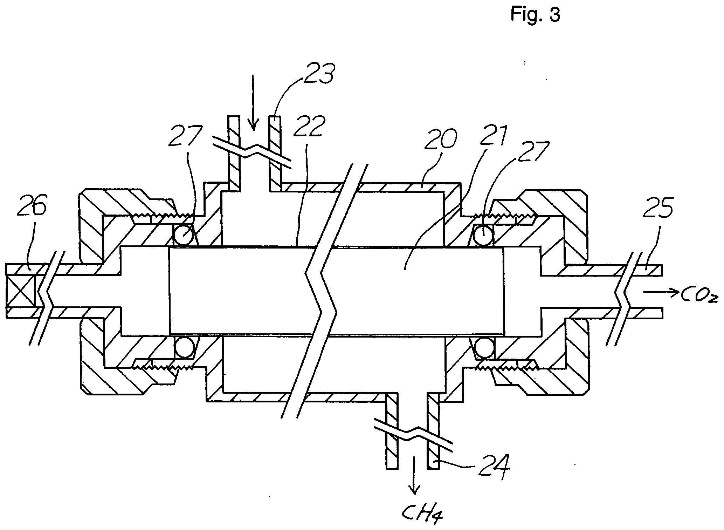

The gas separation module as shown in Fig. 3 was prepared, and was used for the experiments for concentrating methane in the digestion gas. The gas separation module is composed of a round cylindrical alumina column 21 sealed within the pressurizing vessel 20. The alumina column 21 is made of a porous material having continuous holes through which the gas can freely pass, and the DDR zeolite membrane 22 as a gas separation membrane is formed on the circumference of the cylinder with a thickness of 2 µm. The membrane area is 68.4 cm². While a gas inlet port 23, gas exhaust port 24, and permeation gas recovery ports 25 and 26 are formed on the pressurizing vessel 20, the permeation gas recovery port 26 is hermetically sealed. The reference numeral 27 denotes an O-ring for preventing the digestion gas from leaking through the permeation gas recovery port 25, and the O-ring was confirmed to have a sufficient sealing ability by a preliminary experiment.

The digestion gas used in the experiment had a composition comprising 50.9% of methane and 49.1% of carbon dioxide gas, and the pressure was changed up to 1 MPa at room temperature (24 to 26°C). While the digestion gas supplied from the gas inlet port 23 is discharged out of the gas exhaust port 24 after passing through the side of the DDR zeolite membrane 22, carbon dioxide gas in the digestion gas permeates through the membrane surface of DDR zeolite membrane 22 into the inside of the alumina column 21, and is exhausted after flowing to the permeation gas recovery port 25 from the end face of the column. Flow meters were provided at the gas inlet port 23, gas exhaust port 24 and permeation gas recovery port 25, respectively, to measure the each flow rate. The compositions of the gases exhausted out of the gas exhaust port 24 and permeation gas recovery port 25 were analyzed by gas chromatography.

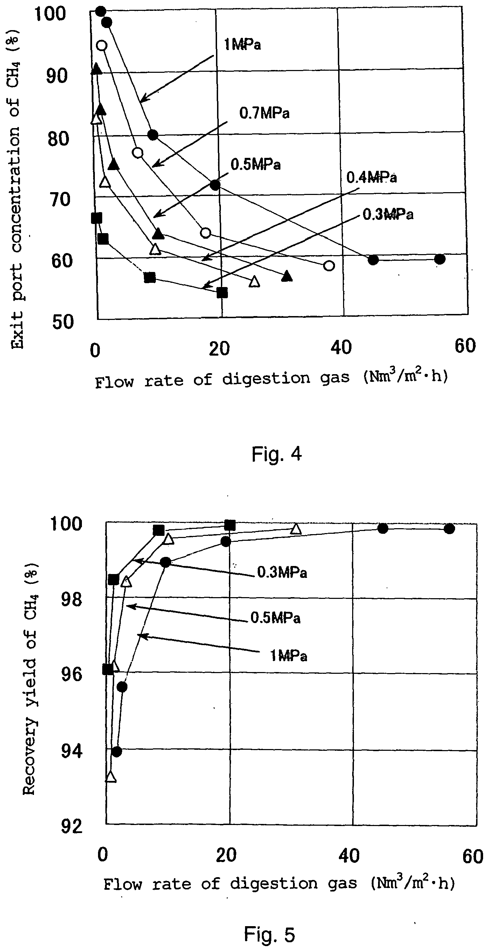

Fig. 4 is a graph showing the effect of the feed pressure and flow rate of the digestion gas on the concentration of methane exhausted out of the gas exhaust port 24. The graph shows that the slower flow rate and higher feed pressure permit the methane concentration at the exhaust port to be higher. For example, when methane concentration is to be concentrated to 70% at the exhaust port, while only 4 Nm³/m²·h of treatment is possible at a feed pressure of 0.4 MPa a treatment of 23 Nm³/m²·h is possible at a feed pressure of 1 MPa. This means that a higher feed pressure is preferable for concentrating methane with the DDR zeolite membrane 22, and a pressure of at least 0.5 MPa or more is preferable.

Fig. 5 is a graph showing the relation between the feed pressure and flow rate of the digestion gas, and recovery yield of methane. Since the DDR zeolite membrane 22 has high separation performance of carbon dioxide gas/methane with substantially no permeation of methane into the permeation side, an excellent methane recovery yield as shown in the graph is obtained.

It was confirmed from the experimental results above that methane in the digestion gas was able to be concentrated using the DDR zeolite membrane 22. It was also confirmed that a higher feed pressure is preferable for concentrating methane. According to the invention, methane contained in the digestion gas can be economically concentrated without requiring much equipment cost and running cost.

## Claims

1. A method for concentrating methane gas contained in a digestion gas by separating and removing carbon dioxide gas from the digestion gas generated from sewage sludge, wherein carbon dioxide gas in the digestion gas is separated and removed through a DDR zeolite membrane (5, 22) after pressurizing the digestion gas at a pressure of 0.5 MPa or more.

2. The method for concentrating methane from sewage sludge according to Claim 1, wherein the digestion gas is pressurized at 1.0 to 3.5 MPa.

3. The method for concentrating methane from sewage sludge according to Claim 1 or 2, wherein the digestion gas is concentrated with the DDR zeolite membrane by a cross-flow method.

4. The method for concentrating methane from sewage sludge according to Claim 1, 2 or 3 wherein concentrated methane gas is introduced into a methane adsorption storage tank (9) without re-pressurizing methane gas to store methane by adsorption.

5. Equipment for concentrating methane gas contained in a digestion gas by separating and removing carbon dioxide gas from the digestion gas generated from sewage sludge, wherein the equipment comprises a pressurizing device (3) for pressurizing the digestion gas containing methane generated from sewage sludge, a DDR zeolite membrane (5, 22) for concentrating methane by separating and removing carbon dioxide gas from the pressurized digestion gas, and a methane adsorption storage tank (9) for storing highly concentrated methane obtained by the DDR zeolite membrane by adsorption with an adsorption agent.

## Patentansprüche

1. Verfahren zur Konzentration von Methangas, das in einem Verdauungsgas enthalten ist, durch Abtrennen und Entfernen von Kohlendioxidgas aus dem Verdauungsgas, das aus Klärschlamm erzeugt ist, wobei das Kohlendioxidgas im Verdauungsgas nach dem Unter-Druck-Setzen des Verdauungsgases bei einem Druck von 0,5 MPa oder mehr durch eine DDR-Zeolithmembran (5, 22) abgetrennt und entfernt wird.

2. Verfahren zur Konzentration von Methan aus Klärschlamm nach Anspruch 1, wobei das Verdauungsgas bei 1,0 bis 3,5 MPa unter Druck gesetzt wird.

3. Verfahren zur Konzentration von Methan aus Klärschlamm nach Anspruch 1 oder 2, wobei das Verdauungsgas mit der DDR-Zeolithmembran durch ein Querstromverfahren konzentriert wird.

4. Verfahren zur Konzentration von Methan aus Klärschlamm nach Anspruch 1, 2 oder 3, wobei das konzentrierte Methangas ohne erneutes Unter-Druck-Setzen des Methangases in einen Methanadsorptionsspeicherbehälter (9) eingeführt wird, um das Methan durch Adsorption zu speichern.

5. Ausrüstung zur Konzentration von Methangas, das in einem Verdauungsgas enthalten ist, durch Abtrennen und Entfernen von Kohlendioxidgas aus dem Verdauungsgas, das aus Klärschlamm erzeugt ist, wobei die Ausrüstung eine Druckvorrichtung (3) zum Unter-Druck-Setzen des aus Klärschlamm erzeugten methanhältigen Verdauungsgases, eine DDR-Zeolithmembran (5, 22) zum Konzentrieren von Methan durch Abtrennen und Entfernen von Kohlendioxidgas aus dem unter Druck stehenden Verdauungsgas und einen Methanadsorptionsspeicherbehälter (9) zum Speichern des durch die DDR-Zeolithmembran erhaltenen, hochkonzentrierten Methans durch Adsorption mit einem Adsorptionsmittel umfasst.

## Revendications

1. Procédé de concentration de gaz méthane contenu dans un gaz de digestion en séparant et en enlevant du dioxyde de carbone gazeux à partir du gaz de digestion généré à partir d'une boue résiduaire, dans lequel le dioxyde de carbone gazeux dans le gaz de digestion est séparé et enlevé à travers une membrane de zéolithe DDR (5, 22) après mise sous pression du gaz de digestion à une pression de 0,5 MPa ou plus.

2. Procédé de concentration de méthane à partir d'une boue résiduaire selon la revendication 1, dans lequel le gaz de digestion est mis sous pression entre 1 et 3,5 MPa.

3. Procédé de concentration de méthane à partir d'une boue résiduaire selon la revendication 1 ou 2, dans lequel le gaz de digestion est concentré avec la membrane de zéolithe DDR par un procédé à flux croisé.

4. Procédé de concentration de méthane à partir d'une boue résiduaire selon la revendication 1, 2 ou 3, dans lequel du gaz méthane concentré est introduit dans un réservoir de stockage d'absorption de méthane (9) sans remettre sous pression le gaz méthane pour stocker le méthane par adsorption.

5. Equipement de concentration de gaz méthane contenu dans un gaz de digestion en séparant et en enlevant du dioxyde de carbone gazeux du gaz de digestion généré à partir d'une boue résiduaire, dans lequel l'équipement comprend un dispositif de mise sous pression (3) pour mettre sous pression le gaz de digestion contenant du méthane généré à partir d'une boue résiduaire, une membrane de zéolithe DDR (5, 22) pour concentrer du méthane en séparant et en enlevant du dioxyde de carbone gazeux depuis le gaz de digestion mis sous pression, et un réservoir de stockage d'adsorption de méthane (9) pour stocker du méthane très concentré obtenu par la membrane de zéolithe DDR par adsorption à l'aide d'un agent d'adsorption.
